# EUROPÄISCHE PATENTSCHRIFT

(11) **EP 0 447 771 B1**
(45) Veröffentlichungstag und Bekanntmachung des Hinweises auf die Patenterteilung: **31.08.1994**
(21) Anmeldenummer: 91101268.0
(22) Anmeldetag: 31.01.1991
(51) Int. Cl.: B61H 7/08

(54) **Wirbelstrom-Schienenbremse**
Eddy current rail track brake
Frein sur rail à courant de Foucault

(30) Priorität: 23.03.1990 DE 4009449
(43) Veröffentlichungstag der Anmeldung: 25.09.1991
(73) Patentinhaber: KNORR-BREMSE AG, 80710 München (DE)
(72) Erfinder: Starck, Günter, W-8069 Ilmmünster (DE); Yener, Mehmet Ugur, W-8000 München 70 (DE)

(56) Entgegenhaltungen:
- EP-A- 0 052 406
- EP-A- 0 274 375
- EP-A- 0 299 318
- BE-A- 511 519

## Beschreibung

Die Erfindung betrifft eine Wirbelstrom-Schienenbremse für Schienenfahrzeuge, mit einem aus einer Hochlage in eine Wirklage absenkbaren, in seiner Anzugstärke geregelten Wirbelstrom-Bremsmagnet, dessen Sohle sich in der Wirklage in geringem Abstand über der Schienenoberfläche befindet, und mit wenigstens einem Justierauflager, das Zwei vertikal übereinander befindliche Justierteile aufweist, deren erstes Justierteil am Wirbelstrom-Bremsmagneten und deren zweites Justierteil an einem ungefederten Fahrzeugteil gehaltert ist, derart, daß in der Wirkstellung die beiden Justierteile in vertikalen Eingriff gelangen.

Bei Schienenbremsen für Schienenfahrzeuge ist grundsätzlich zwischen Magnetschienenbremsen und Wirbelstrombremsen zu unterscheiden: Während die Bremsmagnete von Magnetschienenbremsen auf die Schienenoberfläche aufgesetzt und durch magnetische Kräfte an diese angepreßt werden, so daß die Bremskraft durch mechanische Reibung zwischen dem Bremsmagneten und der Schiene bewirkt wird, werden die Bremsmagnete von Wirbelstrombremsen zweckmäßig mit möglichst geringem Luftspalt berührungsfrei über der Schienenoberfläche geführt, wodurch bei Relativbewegungen zwischen beiden in der Schiene Wirbelströme induziert werden, die bremsend auf den Wirbelstrom-Bremsmagneten zurückwirken. Der große Vorteil der Wirbelstrom-Schienenbremse ist die reibungs- und damit verschleißfreie Bremskrafterzeugung. Eine Eigenheit der Wirbelstrom-Schienenbremse ist, daß sie bei hohen Fahrgeschwindigkeiten eine große Bremskraft mit relativ geringer, magnetischer Anziehungkraft zwischen dem Wirbelstrom-Bremsmagneten und der Schiene aufweisen, daß aber mit sinkender Fahrgeschwindigkeit die Bremswirkung stark abfällt und die magnetische Anziehung zwischen Wirbelstrom-Bremsmagneten und Schiene stark zunimmt. Für beide Typen von Magnet-Schienenbremsen ist es üblich, den Bremsmagneten im unbetätigten Zustand in einen gewissen Sicherheitsabstand über die Schienenoberfläche anzuheben und dieser Hochlage zu verriegeln; in dieser Hochlage werden die Bremsmagnete von einem über die Fahrfzeugfederung abgefederten Fahrzeugteil getragen.

Bei Wirbelstrom-Schienenbremsen ist es bekannt, ein Justierauflager vorzusehen, daß zwei vertikal übereinander befindliche Justierteile aufweist, deren erstes Justierteil am Wirbelstrom-Bremsmagneten und deren zweites Justierteil an einem ungefederten Fahrzeugteil gehaltert ist. Das ungefederte Fahrzeugteil ist dabei zumeist als eine Traverse ausgebildet, welche sich zwischen zwei gleichseitigen Achlagern des Schienenfahrzeuges erstreckt und ungefedert mit diesen Achlagern verbunden ist; wenigstens eine dieser Verbindungen zu den Achlagern kann dabei beispielweise durch Zwischenordnen eines Pendelhebels längsverschieblich ausgebildet sein. In der Hochstellung des Bremsmagneten befinden sich die beiden Justierteile des Justierauflagers mit Abstand übereineiander. Zum Bremsen wird der Bremsmagnet aus der Hochlage in eine Wirklage abgesenkt, wobei die beiden Justierteile in vertikalen Eingriff gelangen, der Bremsmagnet sich also über das Justierauflager auf die Traverse auflegt. Es ist üblich, an jedem Ende des Bremsmagneten ein Justierauflager anzuordnen, wobei eines der Justierteile jedes Justierauflagers vertikal einstellbar ist, wodurch der Abstand der Sohle des Bremsmagneten über der Schienenoberfläche justierbar ist; dieser Abstand muß infolge des Radverschleißes, d.h. der im Betrieb auftretenden Verringerung des Durchmessers der Fahrzeugräder, von Zeit zu Zeit nachjustiert werden.

Bei Wirbelstrom-Schienenbremsen ist es üblich, den Bremsmagneten in der Wirklage über gesonderte Anschläge sowohl in Fahrzeuglängs- wie auch -querrichtung an der Traverse oder einem sonstigen Fahrzeugteil zu führen.

Wie bereits erwähnt, steigt bei Wirbelstrom-Schienenbremsen die magnetische Anziehung zwischen Bremsmagneten und Schiene mit Verringerung der Fahrgeschwindigkeit starkt an, bis sie bei stillstehendem Fahrzeug ihre höchsten Werte erreicht. Es ist bekannt, die Justierauflager, die Traverse und deren Halterungen derart kräftig zu dimensionieren und damit aufwendig und schwer auszubilden, daß sie ohne nennenswerte, elastische Verformung und damit ohne nennenswerte Änderung des Luftspaltes zwischen Schienenoberfläche und Magnetsohle die großen Magnet-Anziehungskräfte bei Fahrzeugstillstand aufnehmen können. Es ist aber auch bekannt, fahrgeschwindigkeits- oder anzugskraftabhängig die Erregung der Wirbelstrom-Bremsmagnete derart zu steuern, daß bei Verringern der Fahrgeschwingkeit bei Erreichen einer bestimmten Fahrgeschwindigkeit, welche beispielsweise zwischen 100 bis 50 km/h liegen kann, eine maximale Anzugskraft auftritt, welche bei weiterem Absinken der Fahrgeschwindigkeit bis zum Fahrzeugstillstand durch Vermindern der Erregung des Bremsmagneten zumindest annähernd konstant gehalten wird; die Justierauflager, Traverse und deren Befestigungsteile müßen dann lediglich zur Aufnahme dieser geregelten, maximalen Anzugskraft dimensioniert werden, diese Teile können also wesentlich leichter als bei Verwendung eines in seiner Erregung ungeregelten Wirbelstrom-Bremsmagneten ausgebildet werden. Es besteht jedoch die Gefahr, daß bei Ausfall der Erregungs-Regelung des Wirbelstrom-Bremsmagneten dieser bis zum Fahrzeugstillstand voll erregt bleibt, wodurch die Halteteile des Wirbelstrom-Bremsmagneten überlastet werden.

Bei Magnetschienenbremsen ist es bekannt, in der Hochlage in Eingriff gelangende, konusartige Anschläge vorzusehen, welche ein Pendeln des Schienenbremsmagneten in der Hochlage ausschließen sollen. Weiterhin ist es für Magnetschienenbremsen bekannt, den Bremsmagneten in Tieflage anzuordnen, wobei er vermittels vorgespannter Federn an einer Traverse ähnlich der vorstehend erwähnten Art aufgehängt ist; wird der Bremsmagnet zum Bremsen erregt, senkt ersich entgegen dieser Federn bis zum Aufsetzten auf die Schienenoberfläche ab. Diese Aufhängungsart mindert jedoch die Bremswirkung und bereitet zudem durch die auch im unbetätigten Zustand niedrige Führung des Bremsmagneten dicht über der Schienenoberfläche Schwierigkeiten.

Es ist Aufgabe der Erfindung, eine Wirbelstrom-Schienenbremse der eingangs genannten Art derart auszugestalten, daß auch bei Ausfallen der Regelung für die Erregung des Wirbelstrom-Bremsmagneten bei Fahrzeugstillstand keine Teile der Wirbelstrom-Schienenbremse bzw. deren Halterung übermäßigt beansprucht werden. Zudem soll eine genaue und sichere Führung des Wirbelstrom-Bremsmagneten in dessen Wirklage mit einfachen und platzsparend anzuordnenden Mitteln erreicht werden.

Diese Aufgabe wird nach der Erfindung dadurch gelöst, daß eines der Justierteile einen vertikalen Zentrierkonus und das andere der Justierteile eine entsprechend konische Ausnehmung zur Aufnahme des Zentrierkonus aufweist, daß das erste Justierteil mittels einer Verschraubung vertikal und horizontal justierbar am Wirbelstrom-Bremsmagneten gehaltert ist und daß das zweite Justierteil vertikal verschieblich am ungefederten Fahrzeugteil geführt und mittels einer vorgespannten Feder gegen dieses Fahrzeugteil abgestützt ist, wobei die Vorspannung der Feder bzw. bei mehreren Justierauflagern die Summe der Vorspannung der Federn größer als die maximale, geregelte Anzugstärke des Wirbelstrom-Bremsmagneten und geringer als dessen ungeregelte Anzugstärke bei stehendem Schienenfahrzeug ist. Hierdurch wird erreicht, daß, sollte die Abregelung der Erregung des Wirbelstrom-Schienenbremsmagneten bei stehendem oder langsam fahrendem Fahrzeug ausfallen, die vorgespannte Feder komprimiert wird und der Wirbelstrom-Bremsmagnet ohne Überlastung seiner Halterungs- und Führungsteile eine Notauflage auf der Schienenoberfläche erfährt.

In den Unteransprüchen sind nach der weiteren Erfindung zweckmäßige und vorteilhafte Weiterbildungsmöglichkeiten einer derartigen Wirbelstrom-Schienenbremse aufgezeigt.

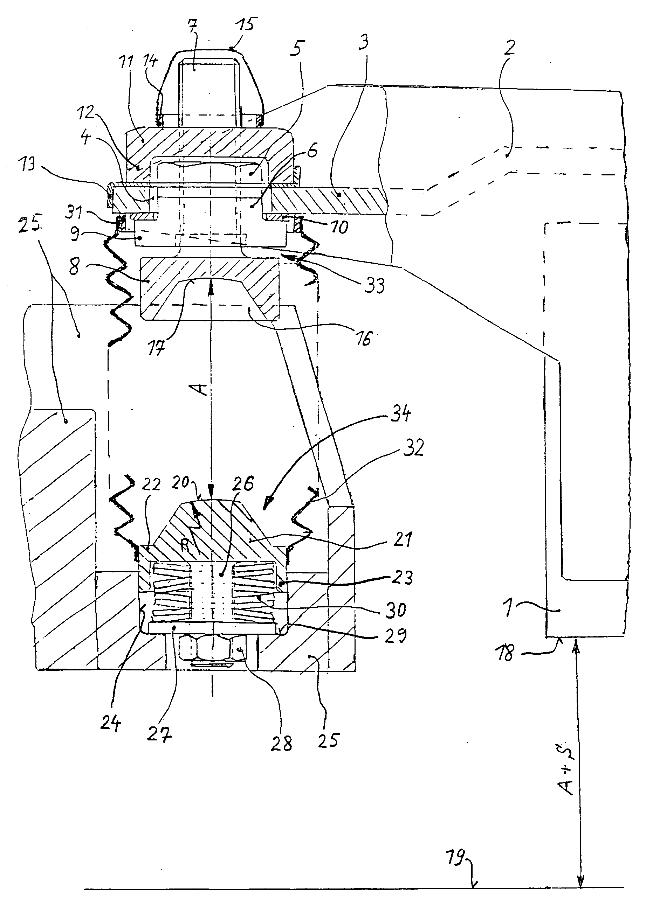

In der Zeichnung ist eine nach der Erfindung ausgebildete Wirbelstrom-Schienenbremse in ihren für die Erfindung wesentlichen Teilen dargestellt.

In der Zeichnung ist ein Endabschnitt eines Wirbelstrom-Bremsmagneten 1 dargestellt, welcher endseitig mit einem auskragenden Träger 2 verbunden ist. Der Träger 2 weist magnetabgewandt in einem horizontalen, plattenartigen Abschnitt 3 eine Bohrung 4 auf, welche mit radialem Spiel von einem Stellansatz 5 einer Justiermutter 6 durchgriffen ist. Die Justiermutter 6 ist mit einer vertikalen Gewindespindel 7 verschraubt, deren unteres Ende eine Platte 8 trägt. Die Justiermutter 6 weist unterhalb des Abschnittes 3 einen Flansch 9 auf, mit welchen sie unter Zwischenlage einer Beilagscheibe 10 von unten am Abschnitt 3 anliegt. Der obere Abschnitt des Stellansatzes 5 ist als Sechskant zum Ansetzen eines Schraubenschlüssels ausgebildet. Oberhalb der Justiermutter 6 ist die Gewindespindel 7 mit einer Kontermutter 11 verschraubt, welche mit ihrem nach unten abgekröpften Rand 12 unter Zwischenlage eines Sicherungsbleches 13 auf der Oberseite des Abschnittes 3 aufsteht; zwischen der Justiermutter 6 und der Kontermutter 11 befindet sich ein geringer, vertikaler Abstand. Die Kontermutter 11 ist fest angezogen, so daß der Abschnitt 3 zwischen ihr und dem Flansch 9 der Justiermutter 6 fest eingespannt ist; das Sicherungsblech 13 ist in seinen Randabschnitten derart rechtwinklig umgeschlagen, daß es einerseits an einer Stirnpartie des Abschnittes 3 und andererseits an einer Außenfläche des Randes 12 der Kontermutter 11 unverdrehbar anliegt und somit die Kontermutter 12 gegen den Abschnitt 3 sichert. Die Kontermutter 11 trägt auf ihrer Oberseite einen Ringansatz 14, welcher mit einer Schutzhaube 15 verbunden ist, welche den die Kontermutter 11 überragenden Abschnitt der Gewindespindel 7 hutartig übergreift und so vor Verschmutzungen und Witterungseinflüssen schützt.

Die Platte 8 weist unterseitig eine konische Ausnehmung 16 auf, deren Grundfläche 17 konkav gewölbt ausgebildet ist. In der dargestellten Hochlage des Wirbelstrom-Bremsmagneten 1, in welcher sich dessen Sohle 18 im Abstand A+S über der Schienoberfläche 19 befindet, wobei A der Absenkhub des Wirbelstrom-Bremsmagneten 1 zu seiner Wirklage und S die Luftspalthöhe bei in Wirklage befindlichem Wirbelstrom-Bremsmagneten 1 zwischen dessen Sohle 8 und der Schienenoberfläche 19 ist, befindet sich im einem dem Absenkhub A entsprechenden Abstand unterhalb der Grundfläche 17 eine mit dem Radius R konvex-ballig ausgebildete Deckfläche 20 eines kegelstumpfartigen Zentrierkonus 21. Der Zentrierkonus 21 überragt einen Teller 22, dessen Rand mit einem abwärtsragenden Führungszylinder 23 versehen ist. Der Führungszylinder 23 ist an der Zylinderwandung 24 einer abgesetzten Bohrung in einer Traverse 25 vertikalverschieblich geführt. Von der Traverse 25 ist lediglich ein kurzer Abschnitt dargestellt, sie stützt sich, wie bereits eingangs zum Stand der Technik beschrieben, in nicht gezeigter Weise ungefedert gegen die beiden zur einen Fahrzeugseite angeordneten Achslager zweier beispielsweise einem Drehgestell zugehörender Radsätze ab, wobei eine dieser Abstützungen in Fahrzeuglängsrichtung verschieblich ausgebildet sein kann; die Traverse 25 stellt somit ein ungefedertes Fahrzeugteil dar. Der Teller 22 trägt zentrisch einen abwärtsragenden Stößel 26, auf welchem ein Federteller 27 verschieblich geführt ist. Unterhalb des Federtellers 27 ist der Stößel 26 mit einer Mutter 28 verschraubt, welche einen Anschlag für den Federteller 27 bildet. Der Rand des Federtellers 27 steht auf einem ringförmigen Innenflansch 29 innerhalb der die Zylinderwandung 24 aufweisenden, abgestuften Bohrung auf. Zwischen dem Teller 22 und dem Federteller 27 ist eine als Tellerfeder ausgebildete Feder 30 mit Vorspannung eingespannt.

Zwischen einem kurzen Ringabsatz 31 an der Unterseite des Abschnittes 3, welcher den Flansch 9 mit Spiel umgibt, und dem Außenrand des Tellers 22 oder, abweichend hierzu und nicht dargestellt, einem entsprechenden Ringansatz an der Traverse 25, erstreckt sich ein Faltenbalg 32.

Die Platte 8 mit der Gewindespindel 7, der Justiermutter 6 und der Kontermutter 11 stellt ein erstes Justierteil 33 und der Teller 22 mit der Mutter 28, dem Federteller 27 und der Feder 30 ein zweites Justierteil 34 dar, welche miteinander ein Justierauflager bilden.

Am anderen, nicht dargestellten Ende des Wirbelstrom-Bremsmagneten 1 befindet sich ein gleichartig ausgebildetes Justierauflager. Weiterhin können Spurstangen vorgesehen sein, welche sich zwischen den Wirbelstrom-Bremsmagneten zu beiden Seiten des Schienenfahrzeuges bzw. deren Träger erstrecken.

In der aus der Zeichnung ersichtlichen Hochlage wird der Wirbelstrom-Bremsmagnet 1 durch nicht dargestellte Hubvorrichtungen gehalten. Zum Bremsen wird er aus dieser Hochlage um den Absenkhub A abgesenkt, wobei der Zentrierkonus 21 und die Ausnehmung 16 mit der Grundfläche 17 und der Deckfläche 20 in vertikalen Eingriff gelangen und zugleich eine Horizontalführung des Wirbelstrom-Bremsmagneten 1 bewirken. Bei schnell fahrendem Fahrzeug wird sodann der Wirbelstrom-Bremsmagnet 1 voll erregt, wodurch eine Wirbelstrombremsung mit der hohen Fahrgeschwindigkeit entsprechend geringer Anzugskraft zwischen Wirbelstrom-Bremsmagneten 1 und Fahrschiene erfolgt; diese Anziehung reicht nicht aus, die Vorspannung der Feder 30 zu überwinden, so daß der Teller 22 in seiner Lage verharrt.

Mit durch die Bremsung abnehmender Fahrgeschwingkeit steigt bei gleichbleibender, maximaler Erregung des Wirbelstrom-Bremsmagneten 1 die Anziehung zwischen letzterem und der Fahrschiene, wobei die Feder 30 jedoch nicht komprimiert wird. Bei Erreichen einer bestimmten Fahrgeschwindigkeit beginnt eine Abregelung der Erregung des Wirbelstrom-Bremsmagneten 1 vermittels hier nicht interessierender Regelorgane, derart, daß die bei der bestimmten Fahrgeschwindigkeit erreichte Anziehungskraft nicht weiter ansteigt, sondern bis zum Stillstand des Fahrzeuges als maximale Anziehungskraft zumindest annähernd konstant bleibt. Diese maximale Anziehungskraft bei in seiner Erregung geregeltem Wirbelstrom-Bremsmagneten 1 reicht nicht aus, um die Vorspannung der Feder 30 zu überwinden, der Teller 22 und damit auch der Wirbelstrom-Bremsmagnet 1 behalten also ihre Höhenlage bei, so daß die Sohle 18 des Wirbelstrom-Bremsmagneten 1 sich während des ganzen Bremsvorganges in der Luftspalthöhe S über der Schienenoberfläche 19 befindet.

Fällt bei niedrigen Fahrgeschwindigkeiten oder stehendem Fahrzeug die Abregelung der Erregung des Wirbelstrom-Bremsmagneten aus, derart, daß dieser voll erregt wird, so ergibt sich eine extrem hohe Anziehungskraft zwischen dem Wirbelstrom-Bremsmagneten 1 und der Schiene, welche die erwähnte, maximale Anziehung bei geregelter Erregung weit übersteigt. Diese hohe Anziehungskraft übersteigt die Vorspannung der Feder 30, so daß der Teller 22 mitsamt dem Justierteil 33 und dem Wirbelstrom-Bremsmagneten 1 unter Kompression der Feder 30 abgesenkt werden, bis sich die Sohle 18 auf die Schienenoberfläche 19 aufsetzt; durch diese Notauflage werden die Beanspruchungen für die Tragteile des Wirbelstrom-Bremsmagneten 1, also den Träger 2 und die Traverse 25 sowie die mit diesen verbundenen Teile, auf einen der Kraft der Feder 30 entsprechenden Wert begrenzt und die Tragteile somit vor einer Überlastung geschützt. Die erwähnten Tragteile brauchen daher nicht entsprechend der extrem hohen Anzugskraft des Wirbelstrom-Bremsmagneten 1 bei ungeregelter Erregung und stehendem Fahrzeug dimensioniert werden, sondern können wesentlich schwächer, lediglich entsprechend der Kraft der Feder 30 bemessen werden.

Aus vorstehenden Erläuterungen ist einsichtig, daß die Vorspannung der Feder 30 bei doppelter Anordnung der Justierauflager zu beiden Enden des Wirbelstrom-Bramsmagneten 1 vermittels der Mutter 28 etwas stärker als die Hälfte der maximalen Anzugskraft des Wirbelstrom-Bremsmagneten 1 bei geregelter Erregung, aber wesentlich schwächer als die Hälfte der Anzugskraft bei ungeregelter Erregung, und stehendem Fahrzeug einzustellen ist. Bei in Wirklage befindlichem Wirbelstrom-Bremsmagneten 1 kann die Luftspalthöhe S nach Lösen des Sicherungsbleches 13 sowie der Kontermutter 11 durch Verschrauben der Justiermutter 6 einjustiert werden. Dabei stellt sich zugleich der Stellansatz 5 innerhalb der Bohrung 4 derart ein, daß sich bei gelösten Kontermuttern auch an den übrigen, über die Wirbelstrom-Bremsmagnete bzw. Spurstangen gekoppelten Justierauflagern eine von horizontalen Verspannungen freie Auflage der Justierteile 33 und 34 ergibt. Anschließend ist die Kontermutter 11 wieder anzuziehen und das Sicherungsblech 13 umzuschlagen.

Durch die Wölbung der Grundfläche 17 und der Deckfläche 20 können geringe Kippbewegungen im Justierlager aufgenommen werden, wobei die Kippbewegungen in der Wirklage bei erregtem Wirbelstrom-Bremsmagneten 1 durch einen Querversatz dieses Wirbelstrom-Bremsmagneten 1 zum Justierauflager und eine hierdurch bewirkte, geringfügige Verwindung bzw. Schrägstellung des Trägers 2 bzw. der Traverse 25 verursacht sein kann. Auch bei geringfügiger Winkelabweichng zwischen den Achsrichtungen des Tellers 22 und der Platte 8 ergeben sich somit kantenpressungsfreie Flächenauflagen zwischen diesen Teilen.

### Kurzfassung:

Die Wirbelstrom-Schienenbremse weist zur Halterung des Wirbelstrom-Bremsmagneten 1 in dessen Wirklage ein Justierlager auf, welches ein erstes Justierteil 33 am Wirbelstrom-Bremsmagneten und ein zweites Justierteil 34 an einem ungefederten Fahrzeugteil umfaßt. Das erste, obere Justierteil 33 ist vertikal und horizontal justierbar mit dem Wirbelstrom-Bremsmangnten 1 verbunden, während das zweite, untere Justierteil 34 am ungefederten Fahrzeugteil 25 vertikal verschieblich geführt und gegen die Vorspannung einer vorgespannten Feder 30 absenkbar ist. Die Erregung des Wirbelstrom-Bremsmagneten ist mit sinkender Fahrgeschwindigkeit abregelbar, derart, daß die Anzugskraft einen bestimmten Maximalwert nicht übersteigt. Die Vorspannung der Feder 30 ist zur Aufnahme dieser Anzugskraft ohne weitere Kompression der Feder 30 bemessen. Fällt die Abregelung der Erregung des Wirbelstrom-Bremsmagneten 1 aus, so komprimiert die bei langsam fahrendem oder stehendem Fahrzeug auftretende, extrem hohe Anzugskraft die Feder 30 und der Wirbelstrom-Bremsmagnet gelangt zur Notauflage auf der Schiene. Hierdurch wird eine Überlastung der Tragorgane des Wirbelstrom-Bremsmagneten 1 ausgeschlossen.

### Bezugszeichenliste

- 1: Wirbelstrom-Bremsmagnet
- 2: Träger
- 3: Abschnitt
- 4: Bohrung
- 5: Stellansatz
- 6: Justiermutter
- 7: Gewindespindel
- 8: Platte
- 9: Flansch
- 10: Beilagscheibe
- 11: Kontermutter
- 12: Rand
- 13: Sicherungsblech
- 14: Ringansatz
- 15: Schutzhaube
- 16: Ausnehmung
- 17: Grundfläche
- 18: Sohle
- 19: Schienenoberfläche
- 20: Deckfläche
- 21: Zentrierkonus
- 22: Teller
- 23: Führungszylinder
- 24: Zylinderwandung
- 25: Traverse
- 26: Stößel
- 27: Federteller
- 28: Mutter
- 29: Innenflansch
- 30: Feder
- 31: Ringansatz
- 32: Faltenbalg
- 33: Justierteil
- 34: Justierteil
- A: Absenkhub
- S: Luftspalthöhe
- R: Radius

## Patentansprüche

1. Wirbelstrom-Schienenbremse für Schienenfahrzeuge, mit einem aus einer Hochlage in eine Wirklage absenkbaren, in seiner Anzugstärke geregelten Wirbelstrom-Bremsmagneten (1), dessen Sohle (18) sich in der Wirklage in geringem Abstand über der Schienenoberfläche (19) befindet, und mit wenigstens einem Justierauflager, das zwei vertikal übereinander befindliche Justierteile (33,34) aufweist, deren erstes Justierteil (33) am Wirbelstrom-Bremsmagneten (1) und deren zweites Justierteil (34) an einem ungefederten Fahrzeugteil (25) gehaltert ist, derart, daß in der Wirkstellung die beiden Justierteile (33,34) in vertikalen Eingriff gelangen, dadurch gekennzeichnet, daß eines der Justierteile (34) einen vertikalen Zentrierkonus (21) und das andere der Justierteile (33) eine entsprechend konische Ausnehmung (16) zur Aufnahme des Zentrierkonus (21) aufweist, daß das erste Justierteil (33) mittels einer Verschraubung (6,7) vertikal und horizontal justierbar am Wirbelstrom-Bremsmagneten (1) gehaltert ist und daß das zweite Justierteil (34) vertikalverschieblich am ungefederten Fahrzeugteil (25) geführt und mittels einer vorgespannten Feder (30) gegen dieses Fahrzeugteil (25) abgestützt ist, wobei die Vorspannung der Feder (30) bzw. bei mehreren Justierauflagern die Summe der Vorspannung der Federn größer als die maximale, geregelte Anzugstärke des Wirbelstrom-Bremsmagneten (1) und geringer als dessen ungeregelte Anzugstärke bei stehendem Schienenfahrzeug ist.

2. Wirbelstrom-Schienenbremse nach Anspruch 1, dadurch gekennzeichnet, daß das erste Justierteil (33) eine vertikale Gewindespindel (7) aufweist, deren unteres Ende eine die konische Ausnehmung (16) aufweisende Platte (8) trägt und welche mit einer von unten formschlüssig an einem mit dem Wirbelstrom-Bremsmagneten (1) fest verbundenen Träger (2) angreifenden Justiermutter (6) verschraubt ist, wobei die Justiermutter (6) einen eine Bohrung (4) des Trägers (2) mit radialem Spiel durchgreifenden Stellenansatz (5) aufweist, und daß der Träger (2) zwischen der Justiermutter (6) und einer auf diesem aufliegenden, sicherbaren (Sicherungsblech 13), mit der Gewindespindel (7) verschraubten Kontermutter (11) eingespannt ist.

3. Wirbelstrom-Schienenbremse nach Anspruch 1 oder 2, dadurch gekennzeichnet, daß das zweite Justierteil (34) einen Teller (22) aufweist, von dessen Oberseite der Zentrierkonus (21) aufragt, dessen Rand mit einem abwärts ragenden Führungszylinder (23) versehen ist, der an einer entsprechenden Zylinderwandung (24) des ungefederten Fahrzeugteils (25) verschieblich geführt ist, und der zentrisch einen abwärts ragenden Stößel (26) aufweist, auf welchem ein Federteller (27) verschieblich geführt ist, der nach unten justierbar gegen den Stößel (26) abgefangen (Mutter 28) ist und dessen Rand auf dem ungefederten Fahrzeugteil (25) aufsteht, und daß zwischen dem Teller (22) und dem Federteller (27) die Feder (30) eingespannt ist.

4. Wirbelstrom-Schienenbremse nach Anspruch 1,2 oder 3, dadurch gekennzeichnet, daß der Zentrierkonus (21) kegelstumpfartig mit balliger Deckfläche (20) und die konische Ausnehmung (16) entsprechend mit konkaver Grundfläche (17) ausgebildet ist.

5. Wirbelstrom-Schienenbremse nach einem oder mehreren der vorstehenden Ansprüche, gekennzeichnet durch einen die beiden Justierteile (33,34) verbindenden Faltenbalg (32).

## Claims

1. Eddy current rail brake for rail vehicles, having an eddy current brake magnet (1) which can be lowered from a raised position into an operating position and which is regulated as regards its attractive force, and whose sole (18) is, in the operating position, at a small distance above the rail surface (19), and having at least one adjustment bearing which has two adjustment portions (33, 34) located vertically one above the other, the first adjustment portion (33) of which is held on the eddy current brake magnet (1) and the second adjustment portion (34) of which is held on an unsprung vehicle portion (25) so that in the operating position the two adjustment portions (33, 34) come into vertical engagement, characterised in that one of the adjustment portions (34) has a vertical centering cone (21) and the other of the adjustment portions (33) has a correspondingly conical recess (16) for receiving the centering cone (21), in that the first adjustment portion (33) is held vertically and horizontally adjustably on the eddy current brake magnet (1) by means of screws (6, 7) and in that the second adjustment portion (34) is guided in a vertically movable manner on the unsprung vehicle portion and is supported by means of a prestressed spring (30) against this vehicle portion (25), the prestressing of the spring (30) or, in the case of several adjustment bearings, the sum of the prestressing of the springs, being greater than the maximum regulated attractive force of the eddy current brake magnet (1) and less than its unregulated attractive force with the rail vehicle stationary.

2. Eddy current rail brake according to claim 1, characterised in that the first adjustment portion (33) has a vertical threaded spindle (7), the lower end of which carries a plate (8) having the conical recess (16) and which is screwed to an adjustment nut (6) engaging in form-fitting manner from below on a carrier (2) fixedly connected to the eddy current brake magnet (1), the adjustment nut (6) having a positioning shoulder (5) passing through a bore (4) of the carrier (2) with radial clearance, and in that the carrier (2) is clamped between the adjustment nut (6) and a counter nut (11) lying on it, which counter nut can be secured (fastening plate 13) and is screwed to the threaded spindle (7).

3. Eddy current rail brake according to claim 1 or 2, characterised in that the second adjustment portion (34) has a dish (22) from whose upper side projects the centering cone (21), whose edge is provided with a downwardly projecting guide cylinder (23) which is guided movably on a corresponding cylinder wall (24) of the unsprung vehicle portion (25), and which has in the middle a downwardly projecting push rod (26) on which a spring washer (27) is movably guided, being adjustably supported downwardly against the push rod (26) (nut 28) and whose edge stands on the unsprung vehicle portion (25), and in that the spring (30) is clamped between the dish (22) and the spring washer (27).

4. Eddy current rail brake according to claim 1, 2 or 3, characterised in that the centering cone (21) is of a truncated cone shape with a convex covering surface (20), and the conical recess (16) is designed accordingly with a concave base surface (17).

5. Eddy current rail brake according to one or more of the preceding claims, characterised by a bellows (32) joining the two adjustment portions (33, 34).

## Revendications

1. Frein sur rail à courant de Foucault pour véhicules sur rails comportant un aimant de frein à courant de Foucault (1), qui peut être abaissé d'une position haute dans une position active et dont la force d'attraction est réglée et dont la semelle (18) est située, dans la position active, à une faible distance au-dessus de la surface (19) du rail, et comportant au moins un support d'ajustement, qui possède deux éléments d'ajustement (33, 34) superposés verticalement, parmi lesquels un premier élément d'ajustement (33) est monté sur l'aimant de frein à courants de Foucault (1) et dont le second élément d'ajustement (34) est monté sur une partie, non suspendue (25), du véhicule, de telle sorte que, dans la position active, les deux éléments d'ajustement (33, 34) coagissent verticalement, caractérisé par le fait que l'un des éléments d'ajustement (34) possède un cône vertical de centrage (21) et que l'autre des éléments d'ajustement (33) possède un évidement conique correspondant (16) servant à recevoir le cône de centrage (21), que le premier élément d'ajustement (33) est monté sur l'aimant de frein à courant de Foucault (1) de manière à pouvoir être ajusté verticalement et horizontalement au moyen d'un système de vissage (6, 7), et que le second élément d'ajustement (34) est guidé, de manière à être déplaçable verticalement, sur la partie non suspendue (25) du véhicule et prend appui, au moyen d'un ressort précontraint (30), sur cette partie (25) du véhicule, la précontrainte du ressort (30) ou, dans le cas de plusieurs supports d'ajustement, la somme des précontraintes des ressorts étant supérieure à l'intensité maximale réglée d'attraction de l'aimant de frein à courant de Foucault (1) et inférieure à l'intensité d'attraction non réglée de cet aimant lorsque le véhicule sur rails est à l'arrêt.

2. Frein sur rail à courant de Foucault suivant la revendication 1, caractérisé par le fait que le premier élément d'ajustement (33) possède une broche filetée verticale (7), dont l'extrémité inférieure porte une plaque (8) qui possède l'évidement conique (16) et qui est vissée, au moyen d'un écrou d'ajustement (6) qui attaque, à partir du bas et selon une liaison par formes complémentaires, un support (2) raccordé de façon fixe à l'aimant de frein à courant de Foucault (1), l'écrou d'ajustement (6) possédant un élément saillant de positionnement (5) qui traverse un perçage (4) du support (2) avec un jeu radial, et que le support (2) est serré entre l'écrou d'ajustement (6) et un contre-écrou (11) qui s'applique sur cet écrou, peut être bloqué (tôle de blocage 13) et est vissé sur la broche filetée (7).

3. Frein sur rail à courant de Foucault suivant la revendication 1 ou 2, caractérisé par le fait que le second élément d'ajustement (34) possède une coupelle (22), dans la face supérieure de laquelle s'étend le cône de centrage (21), et dont le bord comporte un cylindre de guidage (23) qui est tourné vers le bas et est guidé en déplacement contre une paroi cylindrique correspondante (24) de la partie non suspendue (25) du véhicule, et qui possède en position centrée un poussoir (26) qui fait saillie vers le bas et sur lequel est guidée, de manière déplaçable, une coupelle de ressort (27) qui est reçue (écrou 28), de manière à être ajustable vers le bas, contre le poussoir (26) et dont le bord fait saillie sur la partie non suspendue (25) du véhicule, et que le ressort (30) est serré entre la coupelle (22) et la coupelle du ressort (27).

4. Frein sur rails à courant de Foucault suivant la revendication 1, 2 ou 3, caractérisé par le fait que le cône de centrage (21) est réalisé avec une forme tronconique comportant une surface supérieure bombée (20) et que l'évidement conique (16) est agencé de façon correspondante avec une surface de base concave (17).

5. Frein sur rail à courant de Foucault suivant une ou plusieurs des revendications précédentes, caractérisé par un soufflet (32) qui relie les deux éléments d'ajustement (33, 34).
